# EUROPEAN PATENT APPLICATION

(11) **EP 1 314 847 A2**
(43) Date of publication of application: **28.05.2003**
(21) Application number: 02028119.2
(22) Date of filing: 13.03.1998
(51) Int. Cl.: E06B 3/70, E05D 13/00

(54) **Overhead door structure**

(30) Priority: 17.03.1997 IT VR970022
(62) Divisional of application: 98104598.2
(71) Applicant: Taddei, Silvio, 38057 Pergine Valsugana (Trento) (IT)
(72) Inventor: Taddei, Silvio, 38057 Pergine Valsugana (Trento) (IT)
(74) Representative: Reniero, Cirillo Silvano

(57) **Abstract**

An overhead door structure having a swinging mechanism (42, 43, 44), fixed lateral sliding guides, a plurality of box-like modular panels (1, 2, 3), an upper longitudinal member (15) and a lower longitudinal member (12) for stiffening and quick assembly of the panels (1, 2, 3), and securing means (13) for securing each modular panel to each longitudinal member.

## Description

The present invention relates to an overhead door structure particularly suitable for garage doors.

An object of the present invention is to provide an overhead door with modular elements which can be easily and quickly assembled at the installation site.

Another object of the present invention is to provide an overhead door of high performance which can be manufactured at a competitive production costs.

These and other objects that will become more clearly apparent hereinafter are achieved by an overhead door according to the present invention characterized in that it comprises a plurality of box-like modular panels, an upper longitudinal member and a lower longitudinal member for stiffening and quick assembly of the said modular panels and bolt means for securing each modular panels to each longitudinal member

Further features and advantages of the overhead door according to the present invention will became apparent from the following detailed description of a preferred but not exclusive embodiment thereof made with reference to the accompanying drawings, wherein:
Figure 1 is a schematic perspective view of the structure of an overhead door according to the present invention;
Figure 2 shows a detail on an enlarged scale of Figure 1 ;
Figure 3 is a view similar to that of Fig. 1 according to a constructional modification;
Figure 4 is an enlarged-scale perspective view of a detail of Fig. 3;
Figure 5 is an enlarged-scale perspective view of a detail of Fig. 3; and
Figure 6 is a partial side view of Fig. 5.

In the accompanying drawings, identical or similar parts or components have been designated by the same reference numerals.

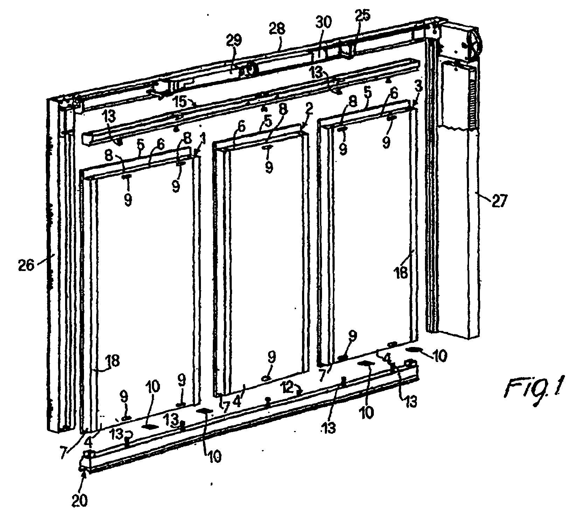

With reference first to Fig. 1, it will be seen that a door structure according to the present invention comprises a swinging door leaf comprising two or more modular panels 1, 2 and 3, each of which is formed by a box-like frame 4, e.g. made of metal, which is covered at its face designed to be directed outwards in use, by a cladding 5, for example made of wood panelling strips which delimit an upper abutment and a lower abutment with the respective box-like frame 4. In particular, the panels 1, 2 and 3 have a respective upper wall 6 and a lower wall 7 in which a number of spaced holes 8 are provided, for example two. A respective transverse access slot 9 is formed at each hole 8 on the face of each box-like frame which is directed inwards.

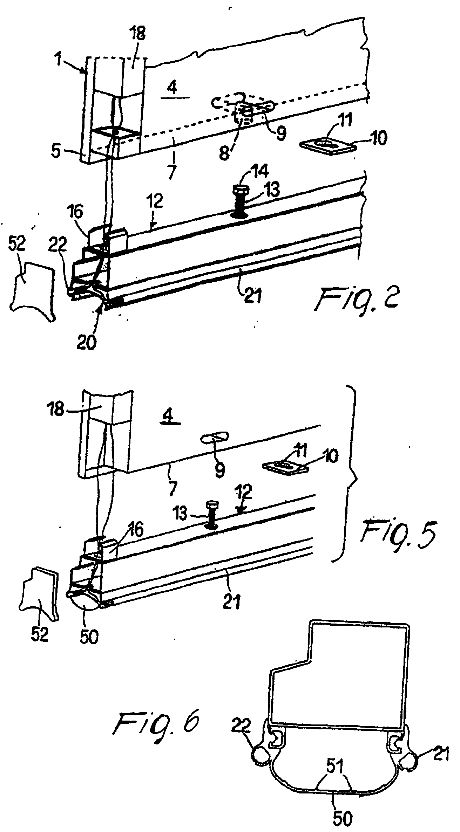

A transversely slidable plate 10 is fitted at each hole 8 and inside the box-like frames 4 and has a slot 11 with two lobes which have a different internal span and are in communication with one another, as described in greater detail in Figure 2.

The modular panels 1, 2 and 3 are designed to rest on a lower tubular longitudinal member 12 from which bolts 13 with respective hexagonal heads extend upwards. The number of the bolts is equal to the number of holes 8 provided in the lower walls 7 of the modular panels. Each bolt 13 can be screwed into a respective nut (not shown in the drawings) which is welded inside the longitudinal member 12. Before being assembled, the plates 10 are arranged so as to have their wider lobe axially aligned with the underlying hole 8, so that by resting the panels 1, 2 and 3 approximately on the longitudinal member 12, the bolts 13 of the member 12 are seated into the respective holes 8 and pass through the respective plate 10 with their head.

The operator, by acting through the slots 9, moves then the plates 10 manually so as to locate their smaller lobe at the stem of the respective bolt 13 and screws the bolt by acting with a wrench through the respective slot 9, thereby tightening the head of the bolt 13 against the plate 10 which acts as a fixing washer. In this manner, each panel 1, 2 and 3 is fixed to the longitudinal member 12 in alignement with the other panels. If required, the operator can then seal the slots 9.

The same is done for fixing of the panels 1, 2 and 3 at the top thereof to a tubular longitudinal member 15 which also has bolts 13, whereby a single operator can quickly and effortlessly perform the whole assembly at the installation site of an overhead door, even if the door has considerable overall dimensions, e.g. when the door leaf comprises five modular panels.

The lower longitudinal member 12 has, at its ends, a bracket 16 which is so dimensioned as to penetrate a respective tubular upright 18 of an inner frame 4 of one of the end panels 1 and 3.

A longitudinal trimming or faceplate 20 is applied in any suitable manner, e.g. glued, underneath the longitudinal member 12. The said trimming is made of a flexible material, such as rubber, and extends over the inner lower edge (i.e. the edge directed towards the space that the door is designed to close) and the outer lower edge of the longitudinal member 12 and thus of the door leaf. On the inner and the outer front, the faceplate 20 delimits two tubular longitudinal cavities 21 and 22, which extend along the entire length of the door and stick out both downwardly and laterally beyond the said door, so as to make sure to be the first part that abuts against any obstacle along the path of the door both while being opened and closed.

The door according to the present invention further comprises two equipped flanks 26 and 27 which have fixed slide guides and an upper cross-member 28 for interconnecting the flanks, the said cross-member 28 supporting an actuation mechanism 29 driven by an electric motor 30 which is controlled by an electronic card 25 and designed to produce the swinging movements of the door, e.g. as disclosed in Italian patent IT-A-1 216 428.

Figures 3 to 6 illustrate an embodiment similar to that shown in Figs. 1 and 2, which comprises a device 40 which makes it possible to adjust both the thrust force while the door is being opened and the braking or damping force which is applied to the door while the latter is being closed. The device 40 comprises an oblong body or block 41 which can be fixed in any suitable manner, e.g. by means of screws or by welding, to the door, preferably to the panel 3 adjacent to the equipped flank 27, which is provided with a pulley 42, a counterweight 43 and a cable 44, preferably of metal material, extending around the pulley 42 for suspending the weight.

A longitudinal through slot 45 is formed in the oblong body 41 and a pin 46 provided with a control head 47 can slide in the slot. At the lower end of the block 46 a stop element 48 is provided which is rigid with, or fixed to, the body 41 and to which one end of the cable 44 is secured, the counterweight 43 being hung to the other end of the cable.

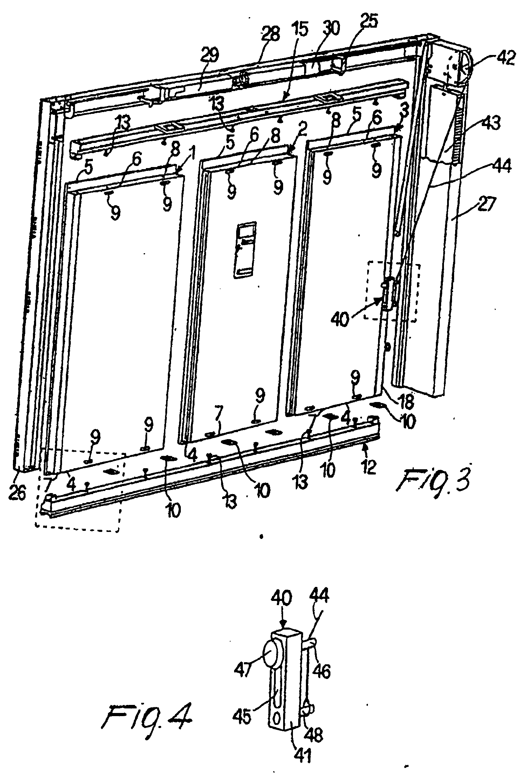

Since the block 41 is offset with respect to the laying plane of the pulley 42, the cable reaches the stop element 48 at an angle with respect to the vertical, its inclination being adjustable by changing the position of the cable engagement pin 46 (Figure 4).

As the angle of the cable 44 changes, so does the load or thrust applied to the door during initial opening stage and the damping thrust at the end of the closing operation.

By suitably adjusting the position of the pin 46 along the slot 45, the door is prevented from slamming against its fixed frame and an adjustable thrust for starting the opening operation is produced.

Moreover, a flexible membrane 50 (Figures 5 and 6) straddles the two tubular cavities 21 and 22 and is designed to close with a good sealing effect the gap between the lower longitudinal member 12 and the threshold when the door is in its closed position.

The membrane 50 is preferably provided with internal stiffening ribs 51.

Advantageously, the ends of the tubular longitudinal member 12 can be closed by s respective removable covering faceplate 52 (Figure 5), which, when required, can be removed, e.g. for maintenance purposes.

## Claims

1. An overhead door structure having a swinging mechanism (42, 43, 44) and fixed lateral sliding guides, **characterized in that** it comprises a plurality of box-like modular panels (1, 2, 3), an upper longitudinal member (15) and a lower longitudinal member (12) for stiffening and quick assembly of the panels (1, 2, 3) and securing means (13) for securing each modular panel to each longitudinal member.

2. A door structure according to Claim 1, **characterised in that** the said longitudinal members (12, 15) are tubular and said securing means comprises a plurality of bolts (13) projecting from, and screwable into, said longitudinal members (12, 15), at least one opening (9) throughout the thickness of each box-like modular panel (1, 2, 3) for seating a respective bolt (13) projecting from a longitudinal member, and a sliding plate (10) which has through openings (11) delimiting lights of different size, is arranged at a respective opening (9) inside each box-like panel (1, 2, 3), and is arranged to be moved from a rest position, in which it can receive the head of a bolt (13), to a welding position, in which it engages the head of said bolt(13) and acts as a fixing washer for the bolt (13).

3. A door structure according to Claim 1 or 2, **characterised in that** it comprises a device (40) for adjusting the thrust force while the door is being opened and the damping force while the same is being closed, the said device comprising an oblong body (41) which can be fixed to the door, an anchoring element (48) fixed to the door for a cable (44) to which a counterweight (43) for the door is hung by'means of a pulley (42), and a pin (46) which can be moved along said oblong body and is arranged to engage said cable (44) to vary its tension.

4. A door structure according to anyone Claim 3, **characterised in that** said oblong body (41) comprises a through slot (45) inside which said pin (46) is slidingly arranged and **in that** said fixed anchoring element (48) is provided on said oblong body (41).
